Europäisches Patentamt

European Patent Office

Office européen des brevets

(19)

(11)  EP 1 424 864 A1

(12)                    EUROPEAN PATENT APPLICATION

(43) Date of publication:
    02.06.2004  Bulletin 2004/23

(51) Int Cl.$^7$: H04Q 7/38

(21) Application number: 02425738.8

(22) Date of filing: 29.11.2002

(84) Designated Contracting States:
    AT BE BG CH CY CZ DE DK EE ES FI FR GB GR
    IE IT LI LU MC NL PT SE SK TR
    Designated Extension States:
    AL LT LV MK RO SI

(71) Applicant: Siemens Mobile Communications
    S.p.A.
    20126 Milano (IT)

(72) Inventors:
    • Laghigna, Massimo
      27029 Vigevano (PV) (IT)
    • Montanari, Fabio
      20080 Basiglio (MI) (IT)

(54) **Method of resource indication in mobile communications systems having cells operating with different radio access techniques**

(57)    A method of performing the resource indication procedure in TD-SCDMA cells of a mobile system communications system comprising both TD-SCDMA and GSM cells and a GSM mobile-services switching centre, includes a remapping of the TD-SCDMA resources into the equivalents of GSM (enhanced) full rate and half rate traffic channels. The remapping includes, for each carrier equipped in the cell: grouping the Abis resources separately for available and total accessible resources and, for both, separately for full rate and half rate resources; grouping the radio resources, separately for available and total accessible resources and, for both, separately for full rate and half rate resources for the uplink and downlink direction; and matching Abis, uplink and downlink resources in homologous groups (Fig. 6).

START

grouping Abis resources into the counters — 101
$n_{AvAbis16}$, $n_{AvAbis8}$, $n_{TotAccAbis16}$ and $n_{TotAccAbis8}$

X = 0 — 102

N       is carrier X       103
        equipped?
        Y

grouping radio resources of carrier X into
counters     $n_{ULAvEFRLike}[b]$,        $n_{DLAvEFRLike}[b]$, — 104
$n_{ULAvHRLike}[b]$,      $n_{DLAvHRLike}[b]$,      $n_{ULTotAccEFRLike}$,
$n_{DLTotAccEFRLike}$, $n_{ULTotAccHRLike}$ and $n_{DLTotAccHRLike}$

matching radio and Abis resources in order
to retrieve counters $N_{AvEFR(X)}[b]$, $N_{AvHR(X)}[b]$, — 105
$N_{TotAccEFR}$ and $N_{TotAccHR}$

INC X — 106

107     X > 2 ?     N
        Y

scaling counters $N_{AvEFR(B)}[b]$, $N_{AvHR(B)}[b]$,
$N_{TotAccEFR}$ and $N_{TotAccHR}$ according to O&M — 108
attribute BCCHIdleResThr

retrieving counters $N_{AvEFR}[b]$ and $N_{AvHR}[b]$ — 109

END

FIG 6

**Description**

FIELD OF THE INVENTION

The present invention relates to mobile communications systems and more particularly it concerns a method of performing the resource indication procedure in mobile communications systems having cells with different radio access techniques, when the circuit switching centre managing the procedure knows only one such access technique.
Preferably, but not exclusively, the invention refers to a method allowing a station controller of a cell operating according to a TD-SCDMA (Time Division - Synchronous Code Division Multiple Access) technique to send the resource indication message(s) required by a GSM (Global System for Mobiles) Mobile-services Switching Centre (MSC), in view of the MSC-controlled handover in a system in which TD-SCDMA and GSM cells coexist and the GSM mobile-services switching centre provides for call control and mobility management for both kinds of cells.

BACKGROUND OF THE INVENTION

Third generation mobile communications systems are becoming operative. It is clear that their introduction gives rise to problems of compatibility and interfacing with the existing second-generation systems. Moreover, a heavy economic effort is required to the operators to install the new systems. Thus, solutions providing for a reuse of part of the equipment of an existing second-generation system are of interest, to reduce both the interfacing problems and the installation costs.
For instance, in case of GSM second generation systems, it is likely that, at least in a first phase of the introduction of the third generation system, a core network GSM will have to provide for call control and mobility management of circuit-switched communications for cells of both generations. Note that the term GSM, even if used alone, is intended to include also the DCS (Digital Cellular System), which is based on the same standards.
Under such situation, a high roaming from one system to the other is to be foreseen. A particular aspect of this roaming will be the intersystem handover, which in many cases will be managed by the MSC, like the external handover between cells belonging to different base station subsystems in the GSM.
As known, in case of external handover, the MSC starts, for the possible target cells, a procedure known as "Resource Indication", which is disclosed in GSM Technical Specification 08.08 by ETSI (European Telecommunications Standards Institute) and in 3GPP Technical Specification TS 48.008 by 3GPP (3rd Generation Partnership Project). Briefly summarised, the aim of this procedure (that concerns the A interface) is to inform the MSC about the amount of available (i.e. enabled to traffic and in idle state) radio resources and the total amount of accessible (i.e. enabled to traffic, in idle state or currently assigned) radio resources at the base station subsystem side. The above information is sent by the Base Station Controller (BSC) to MSC as one or more messages containing, in the most general case, the Resource Available Information Element (IE) and the Total Resource Accessible IE. The former contains the number of available (E)FR TCHs ((Enhanced) Full Rate Traffic Channels) and the number of available HR (half rate) TCHs for each of five interference bands which the GSM channels are classified into depending on their average interference level. The Total Resource Accessible IE contains similar information for the accessible TCHs, yet without separation among interference bands.
A particular case of coexisting 2nd generation - 3rd generation cells, is the TSM (TD-SCDMA System for Mobiles), where TD-SCDMA stands for Time Division - Synchronous Code Division Multiple Access. That system, which is presently being defined by the CWTS (Chinese Wireless Telecommunication Standards), is based on a third generation, CDMA radio access technique with time-division duplexing, standardised by the 3GPP, but it uses many of the functions and procedures provided by the upper layers of the GSM protocols.
In case of external handover in such system, both GSM and TD-SCDMA cells may refer to the same MSC, being the A interface common to both systems (in other words, MSC does not distinguish between GSM and TD-SCDMA cells). Thus also TD-SCDMA station controllers (the so-called Radio Network Controllers, or RNC) have to send the same kinds of signalling messages (and in particular a resource indication message) as the GSM cells to MSC, over the A interface.
This is a particularly hard task for a RNC, due to the macro-differences existing between GSM and TD-SCDMA radio access techniques as concerns: 1) Division Duplexing (i. e. separation between uplink and downlink direction of communication); 2) Division Multiple Access; 3) Radio-Abis channel association (i. e. the association between channels on the radio interface and the interface between the radio transceivers and the station controller); and 4) Interference Measurements.
More particularly, in respect of 1), GSM is a FDD (frequency division duplexing) system, i.e. the uplink and downlink time slots of a connection are located on two different but rigidly associated carriers, whereas TD-SCDMA is a TDD (time division duplexing) system, i.e. the uplink and downlink time slots of a connection are located on the same carrier and, moreover, they can be chosen independently of each other.

In respect of 2), GSM is a FDMA+TDMA system, i.e. the generic accessible channel is determined by a frequency/time slot combination, and TD-SCDMA is a FDMA+TDMA+CDMA system, i.e. the generic accessible channel is determined by a frequency/time slot/code combination.

In respect of 3), GSM provides for a semi-static association between radio and Abis channels, and TD-SCDMA system foresees a DCA (Dynamic Channel Allocation) feature on both the radio and Abis interfaces.

Lastly, in respect of 4), in GSM system the interference measurements are performed only on uplink idle time slots, whereas in TD-SCDMA they are periodically performed on both uplink (by the TD-SCDMA base transceiver station, BTSC) and downlink (by the User Equipment, UE) time slots, independently of their usage state, since a time slot is shared among several connections (thanks to the CDMA technique) and it could be fully idle only during short time intervals. Further, the interference measurements carried out in a time slot are not provided by the BTSC to the RNC: the BTSC converts the interference values into a priority value of the time slot, i. e. into a probability that the interference generated by other cells or frequencies on that time slot is below a given threshold, and communicates such priority to the RNC.

The macro-differences listed above have until now discouraged the attempt to perform the resource indication procedure for a TD-SCDMA cell. The currently adopted solution is just to ignore the problem and to cause the concerned RNC to send MSC a message filled (in most cases) with static pieces of information which do not reflect the real resource situation of the cell itself. The consequence of this rough approximation is of course a bad balancing at MSC side among GSM and TD-SCDMA cells, which could prejudice the correct behaviour of the network for what concerns the addressing of the handovering connections.

The present invention just aims at providing a solution to the problem of performing the resource indication procedure also for external handovers concerning TD-SCDMA target cells which must report to a GSM mobile-services switching centre, or more generally, cells operating according to a radio access technique different from that known to the units entrusted with call control and mobility management in the core network of the system.

SUMMARY OF THE INVENTION

According to the invention, this aim is achieved by a remapping of the communication resources of a cell operating according to said different radio access technique into equivalents of resources that can be recognised by a circuit switching centre managing the resource indication procedure, as claimed in claim 1.

Preferred features of the method are disclosed in the dependent claims 2 to 13.

The invention also provides a method for external handover in which the resource indication procedure is carried out according to the method of the invention, and a mobile communications system employing the method of the invention.

BRIEF DESCRIPTION OF THE DRAWINGS

The invention will be better understood with reference to the accompanying drawings, in which:

- Fig. 1 is a schematic representation of a mobile communications system including both GSM and TD-SCDMA cells, connected to a GSM core network;
- Fig. 2 is a schematic block diagram of an external handover between two cells of the system of Fig. 1;
- Fig. 3 is a schematical representation of the GSM resource indication message for a cell;
- Fig. 4 is a diagram explaining the resources for a GSM cell;
- Fig. 5 is a set of diagrams explaining the resources on the radio and Abis interfaces of a TD-SCDMA cell; and
- Figs. 6 to 8 are flow charts of the method of the invention, for the resource indication by a TD-SCDMA cell to the GSM core network.

DESCRIPTION OF THE PREFERRED EMBODIMENT

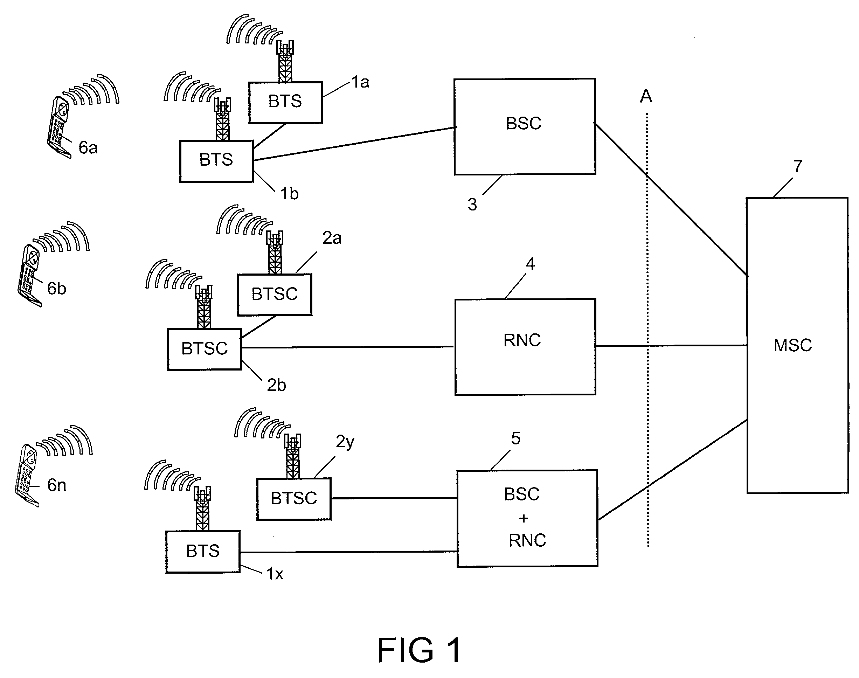

Fig. 1 shows a mobile communications system comprising both GSM and TD-SCDMA cells. The cell boundaries are not shown in the drawing for sake of simplicity. The GSM cells are served by respective base transceiver stations 1a, 1b...1x (blocks labelled BTS) and the TD-SCDMA cells are in turn served by respective TD-SCDMA base transceiver stations 2a, 2b...2y (blocks labelled BTSC). The terms "base transceiver station" and "cell" are used here as synonims. Different cells may be controlled by a common base station controller BSC (for GSM) or radio network controller RNC (for TD-SCDMA), as shown for cells 1a, 1b, controlled by controller 3, and cells 2a, 2b, controlled by controller 4. The relative geographic location of the cells with different radio accesses is not of interest. Being the frequency bands of the two systems separated, a same geographic area could even be served by both systems without any interference among them. In such case, a common controller 5, which carries out the functions of both BSC and RNC, could be provided, as shown in the lower portion of the Figure, for GSM and TD-SCDMA cells 1x, 2y respectively.

The drawing further shows a number of mobile terminals 6a...6n served by the cells: said terminals can be single-standard terminals, only accessing either the GSM or the TD-SCDMA cells (e. g. terminals 6a, 6b) or dual-standard terminals capable of accessing both kinds of cells (e. g. terminal 6n).

As said before, the TD-SCDMA system employs, at the core network level, the same procedures as the GSM, and hence all station controllers 3, 4, 5 are connected, as far as the circuit-switched communication are concerned, with a common Mobile-services Switching Centre (MSC) 7, which is the switching centre of the GSM system. Thus, a common interface (known as A interface and schematised by a dotted line in the drawing) exists for conveying voice, data and signalling between station controllers, regardless of the system they belong, and switching centre 7. The invention is just concerned with signalling over said interface.

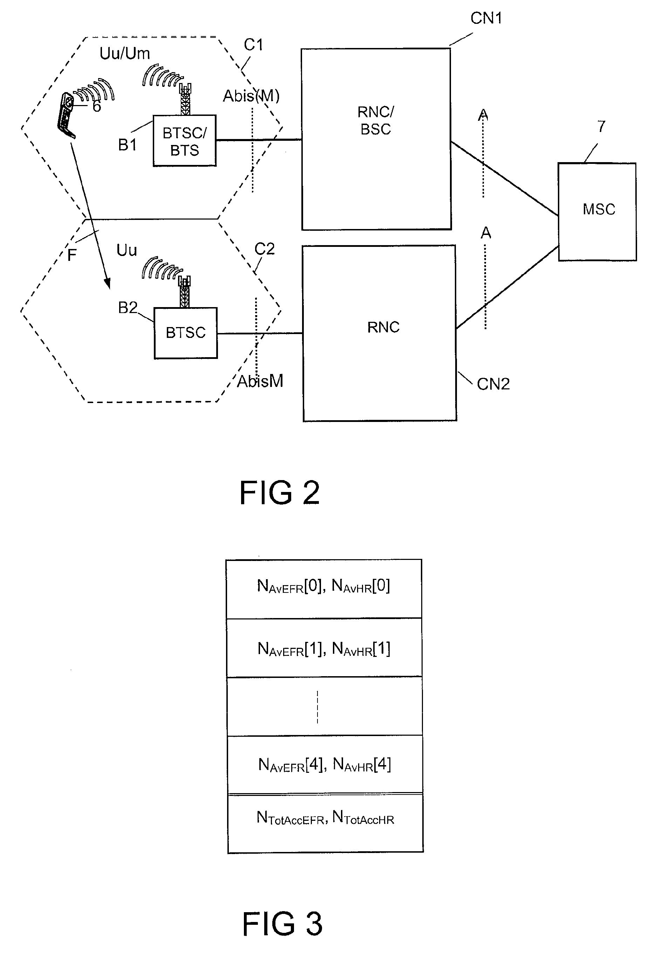

Referring to Fig. 2, two cells C1 and C2 are shown, with respective transceiver stations B1, B2 and station controllers CN1, CN2. The radio interfaces, the Abis interfaces between transceiver stations B1, B2 and controllers CN1, CN2, and the A interfaces between controllers CN1, CN2 and switching centre 7 are also indicated. A mobile station 6, currently served by cell C1 and capable of operating with both radio access techniques, is moving towards cell C2 (see arrow F), and a handover towards that cell is foreseen. Since serving cell C1 and target cell C2 belong to different base station subsystems B1, CN1 and B2, CN2, respectively, the handover will be managed by switching centre 7 and includes execution of the resource indication procedure.

The kind of serving cell C1 is of no relevance, and hence the interfaces and the units of the base station subsystem have been labelled with the abbreviations of both systems. The target cell is assumed instead to be a TD-SCDMA cell since the invention applies to such cells; hence the various elements are labelled by the abbreviations specific for TD-SCDMA. For cell C2, a remapping converting the TD-SCDMA resources into GSM resources is to be performed, in order the MSC 7 receives a resource indication message that not only is in the proper format, but also contains actual information on the traffic load of the cell. Note that, even if for sake of simplicity only the serving and the target cells are shown, the resource indication procedure will be started for all cells referring to the MSC, except the serving one. It is clear that, when the resource indication concerns a GSM cell, no problem of communication with MSC exists.

The content of a resource indication message according to GSM specification 08.08 is shown for a single cell in Fig. 3. As said, the message contains, besides other information items that are not of interest for the invention and are disclosed in GSM specification, the number of available FR and HR TCHs for each of the five interference bands and, possibly, the total number of accessible FR and HR TCHs. Such numbers are denoted $N_{AVEFR}[b]$, $N_{AVHR}[b]$ and $N_{TotAccEFR}$, $N_{TotAccHR}$, b being the interference band ($0 \leq b \leq 4$). The remapping of the TD-SCDMA resources has therefore to provide the equivalents of the half rate and full rate traffic channels and the interference bands.

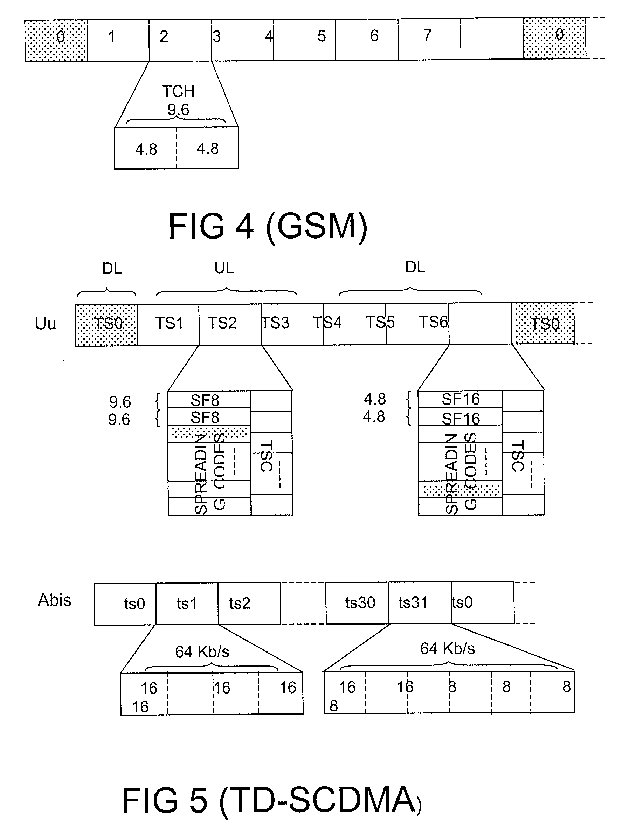

For a better understanding of this remapping, reference is made to Figs. 4 and 5.

Fig. 4 shows the frame for a carrier on the GSM radio interface. The frame includes eight time slots. Time slots enabled to traffic make each available the band necessary for a full rate channel at 9.6 Kbit/s, or two half rate channels at 4.8 Kbit/s each. Since a static association exists between the two carriers used for the two directions of communication and between the resources on the Um (radio) and Abis interfaces, to obtain the above numbers it is sufficient to properly count the time slots enabled to traffic on the radio interface Um, either in uplink or downlink direction. The counts for the half rate channels shall include also the full rate channels that can be used as half rate channels, even if they have been counted for the full rate resources. In the drawing, dotted time slot 0 schematises the fact that some time slots are not enabled to traffic.

The situation is more complex for TD-SCDMA, since both directions on the radio interface Uu and the Abis interface are to be considered, as shown in Fig. 5, again for a single carrier.

Considering first the radio interface Uu, the frame is divided into seven time slots, part of which are downlink time slots and the others are uplink time slots. A number of codes is associated to each time slot, and the time slots and the codes in each direction are independently allocable. Some time slots and codes are not enabled to traffic, as it will be disclosed hereinafter. This is schematised by dotted time slots and codes.

In the TD-SCDMA terminology, reference is made to the so-called Basic Resource Units (BRU). A Basic Resource Unit corresponds to the radio resources required by a half rate communication for one direction of communication. A BRU in a time slot is obtained by means of a code with spreading factor 16 (SF16 in the drawing). The concept of spreading factor is well known to the skilled in the art. A full rate channel will need two BRUs, i. e. two codes with spreading factor 16 or a code with spreading factor 8 (SF8).

Moreover, two kinds of codes exist, namely the spreading codes (SC), that form the basic resource units, and the training sequence codes (TSC), or midambles, used by the mobile stations and the BTSC for measurements, and the number of training sequence codes is generally lower than that of the spreading codes. Any connection requires, besides the BRUs, also a midamble. Thus, for setting up a channel on the radio interface it is necessary that the corresponding basic resource units and a midamble exist in both directions.

As to the Abis interface, also its resources are dynamically allocated, independently of the radio resource allocation, and the Abis resources are generally less than the radio resources. Signal transmission over the Abis interface is a PCM transmission at 2 Mbit/s, organised in frames of 32 time slots ts0...ts31 each conveying 64 Kbit/s and comprising four subslots of 16 Kbit/s each. A subslot makes thus available the bandwidth required for a full rate channel. A subslot can be in turn divided into two 8 Kbit/s fractions (see ts31), each allocable to a half rate channel. Thus, the further necessary condition to build a traffic channel is the availability of the resources also on the Abis interface,

Thus, the equivalent of GSM full rate traffic channel will be, in TD-SCDMA, the combination of 2 BRUs (i.e. 2 spreading codes with spreading factor 16 or 1 SC with SF8) and 1 TSC in each direction over the radio interface, and 1 subslot (16 Kbit/s) over the Abis interface. Similarly the equivalent of a half rate channel will be the combination of 1 BRU (i.e. 1 SC with SF16) and 1 TSC in each direction over the radio interface, and 1 subslot fraction (8 Kbit/s) over the Abis interface.

Lastly, since the TD-SCDMA system exploits the priority for the channel allocation, it will be also necessary to determine a number of priority thresholds and to define five priority bands into which the radio resources will be classified. To maintain consistency with the GSM message, the first priority band (band 0) will correspond to the highest priorities (i. e. to the best quality) and the last band (band 4) to the lowest ones.

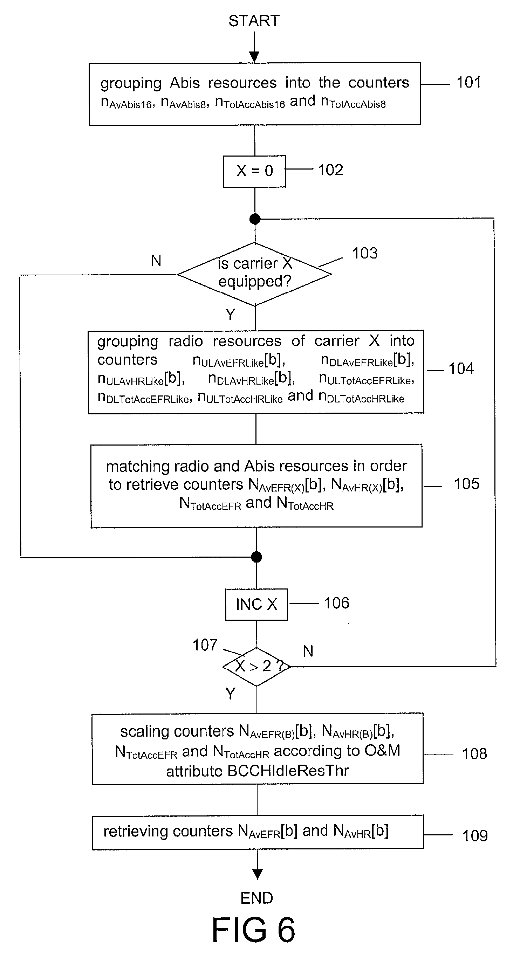

The remapping algorithm will now be described in greater detail with reference to Figs. 6 to 8. In these flow charts, some assumptions have been made:

- each cell supports up to three carriers;
- the uplink/downlink switching point of each carrier is located after time slot TS3;
- the resources belonging to time slot TS0 of each carrier cannot be assigned to any kind of traffic;
- all resources assigned to a connection must be located on the same carrier;
- the dynamic channel allocation (DCA) feature on the radio interface includes a signal-to-interference ratio (SIR) based and a priority based admission control. (We recall here that the priority based admission control assigns a time slot to a cell if its priority is higher than a certain priority threshold, and the SIR based Admission Control forbids/allows the use of a certain frequency and time slot when it is/is not reused at low distance by an adjacent cell, the decision being based on the interference measurement at the allocation time);
- 16 BRUs are available in a time slot;
- a maximum number of TSCs is allowed in each time slot of the cell;
- codes of different spreading factors are not allowed in the same time slot;
- the allowed spreading factors for each time slot are only SF16 and SF8;
- all Common Channels, i. e. Primary-Common Control Physical CHannel (P-CCPCH), Physical-Forward Access CHannel (P-FACH), Physical-Random Access CHannel (P-RACH) and Secondary-Common Control Physical CHannel (S-CCPCH) must be located on the same carrier (BCCH carrier). In particular P-CCPCH is always located on the time slot TS0, P-RACH can be located on any uplink time slot P-FACH and S-CCPCH can be located on any downlink time slot (but time slot TS0);
- the DCA algorithms must keep in idle state, on the BCCH carrier, a percentage of resources not lower than a minimum threshold (BCCHIdleResThr) set by the O&M: this is because, according to TSM specifications, the user equipment has to use always the BCCH carrier to access to the network, but it can remain on that carrier also for the subsequent traffic phase: leaving resources not utilisable for traffic on that carrier permits the access to a number as great as possible of users.

Referring to Fig. 6, at step 101, the Abis resources are for full rate and half rate communications are located and grouped into counters $n_{AvAbis16}$, $n_{AvAbis8}$, $n_{TotAccAbis16}$ and $n_{TotAccAbis8}$, which count the numbers of available 16 Kbit/s subslots and available 8 Kbit/s subslot fractions, and the total number of accessible 16 Kbit/s subslots and accessible 8 Kbit/s subslot fractions, respectively.

Then, starting from the first carrier equipped in the cell (steps 102, 103), the radio resources of the carrier are located and grouped (step 104) into eight counters:

- $n_{ULAvEFRLike}[b]$ ($n_{DLAvEFRLike}[b]$), b = 0...4, which count the number of available (E)FR-like resources (i.e. couples of BRUs) belonging to the uplink (downlink) time slots whose priority value belongs to band b;
- $n_{ULAvHRLike}[b]$ ($n_{DLAvHRLike}[b]$), b = 0..4, which count the number of available HR-like resources (i.e. single BRUs) belonging to the uplink (downlink) time slots whose priority value belongs to the band b;
- $n_{ULTotAccEFRLike}$ ($n_{DLTotAccEFRLike}$), which count the total number of accessible (E)FR-like resources (i.e. couples of BRUs) belonging to the uplink (downlink) time slots;
- $n_{ULTotAccHRLike}$ ($n_{DLTotAccHRLike}$), which count the total number of accessible HR-like resources (i.e. single BRUs) belonging to the uplink (downlink) time slots.

The counts carried out by the above counters can be expressed by the following mathematical relations:

$$n_{\text{ULAvEFRLike}}[b] = \sum_{i=1}^{3} \tau_{i,X} \pi_{i,X}(b) \min\left(N_{\text{Avail}}(TS_{i,X})/2, N_{\text{AvailTSCs}}(TS_{i,X})\right) \tag{1}$$

$$n_{\text{DLAvEFRLike}}[b] = \sum_{i=4}^{6} \tau_{i,X} \pi_{i,X}(b) \min\left(N_{\text{Avail}}(TS_{i,X})/2, N_{\text{AvailTSCs}}(TS_{i,X})\right) \tag{2}$$

$$n_{\text{ULAvHRLike}}[b] = \sum_{i=1}^{3} \tau_{i,X} \pi_{i,X}(b) \phi_{i,X} \min\left(N_{\text{Avail}}(TS_{i,X}), N_{\text{AvailTSCs}}(TS_{i,X})\right) \tag{3}$$

$$n_{\text{DLAvHRLike}}[b] = \sum_{i=4}^{6} \tau_{i,X} \pi_{i,X}(b) \phi_{i,X} \min\left(N_{\text{Avail}}(TS_{i,X}), N_{\text{AvailTSCs}}(TS_{i,X})\right) \tag{4}$$

$$n_{\text{ULTotAccEFRLike}} = \sum_{i=1}^{3} \tau_{i,X} \min\left((16 - N_{\text{CommChan}}(TS_{i,X}))/2, N_{\text{TSCs}}(TS_{i,X})\right) \tag{5}$$

$$n_{\text{DLTotAccEFRLike}} = \sum_{i=4}^{6} \tau_{i,X} \min\left((16 - N_{\text{CommChan}}(TS_{i,X}))/2, N_{\text{TSCs}}(TS_{i,X})\right) \tag{6}$$

$$n_{\text{ULTotAccHRLike}} = \sum_{i=1}^{3} \tau_{i,X} \phi_{i,X} \min\left(16 - N_{\text{CommChan}}(TS_{i,X}), N_{\text{TSCs}}(TS_{i,X})\right) \tag{7}$$

$$n_{\text{DLTotAccHRLike}} = \sum_{i=4}^{6} \tau_{i,X} \phi_{i,X} \min\left(16 - N_{\text{CommChan}}(TS_{i,X}), N_{\text{TSCs}}(TS_{i,X})\right) \tag{8}$$

where:

$$\tau_{i,X} = \begin{cases} 1 & \text{if } TS_{i,X} \in S_T \\ 0 & \text{otherwise} \end{cases}$$

$$\pi_{i,X}(b) = \begin{cases} 1 & \text{if } P(TS_{i,X}) \in \text{priority band } b \\ 0 & \text{otherwise} \end{cases}$$

$$\phi_{i,X} = \begin{cases} 1 & \text{if } SF(TS_{i,X}) = SF16 \\ 0 & \text{otherwise} \end{cases}$$

- b is the priority band;
- $TS_{i,X}$ is the i-th time slot (i = 0..6) of the X-th carrier (X = 0...2) equipped in the cell;
- P is the priority value of a time slot;
- SF is the Spreading Factor of a time slot;
- $N_{Avail}(TS_{i,X})$, $N_{CommChan}(TS_{i,X})$, $N_{AvailTSCs}(TS_{i,X})$ are the numbers of available BRUs, of BRUs assigned to common channels and of available TSCs, respectively, in time slot $TS_{i,X}$, and $N_{TSCs}(TS_{i,X})$ is the maximum number of TSCs allowed in time slot $TS_{i,X}$;
- $S_T$ is the set of time slots enabled to traffic by O&M, SIR Based and Priority Based Admission Control.

The summations in relations (1) to (8) can be immediately understood referring to the explanations given in connection with Fig. 5. The factor 1/2 for the number of BRUs in counters (1), (2), (5) and (6) of the full rate resources takes into account that two BRUs are required for a full rate connection, and the minimum of the two numbers within parentheses takes into account that a training sequence code is required besides the BRU (or the two BRUs). In the relations concerning the accessible resources, it is clear that the number of accessible BRUs is the difference between the 16 available BRUs and the number of BRUs used for signalling in the same time slot. Note that $N_{Avail}$ could be similarly written 16 - $N_{CommChan}(TS_{i,X})$ - $N_{Assigned}$, where $N_{Assigned}$ is the number of BRUs already assigned in the cell. The Kronecker functions $\tau$, $\pi$, $\phi$ indicate that certain conditions are to be met in order a resource can be counted. In particular, $\tau$ substantially indicates that the BRU can be counted only if the time slot it belongs to is enabled to traffic and passes the admission controls: a strong level of interference would indeed mean that presumably that resource is already used by another cell. The meaning of $\pi$ and $\phi$ is immediately apparent: $\pi$ indicates the attribution of the resource to the counter of the proper priority band, and $\phi$ takes into account the spreading factor for the half rate.

The subsequent step 105 is the matching of the counters built at steps 101 and 104 for setting together the uplink and downlink radio resources and the Abis resources and building the equivalents of the GSM traffic channels. As a result of the matching step 105, counters $N_{AvEFR(X)}[b]$, $N_{AvHR(X)}[b]$ are built for the available resources on each carrier X, and general counters $N_{TotAccEFR}$ and $N_{TotAccHR}$ are built for the accessible resources. Note that, even if the information elements in the resource indication message do not discriminate among the different carriers, a separate counter for each carrier is necessary for the available resources for reasons that will become apparent from step 108.

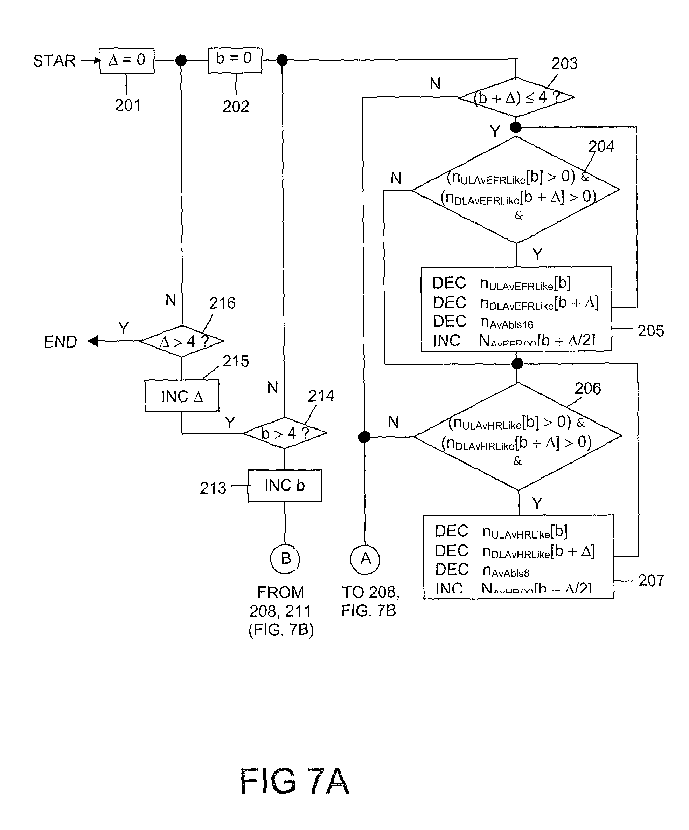

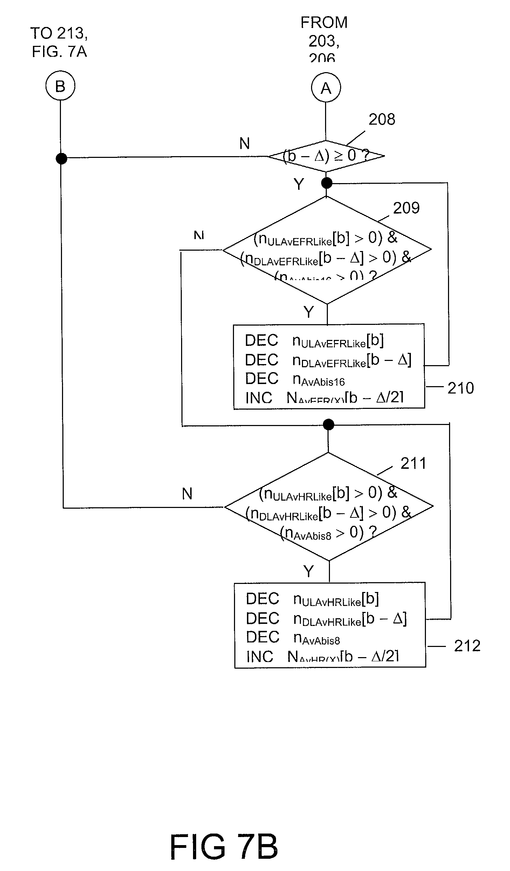

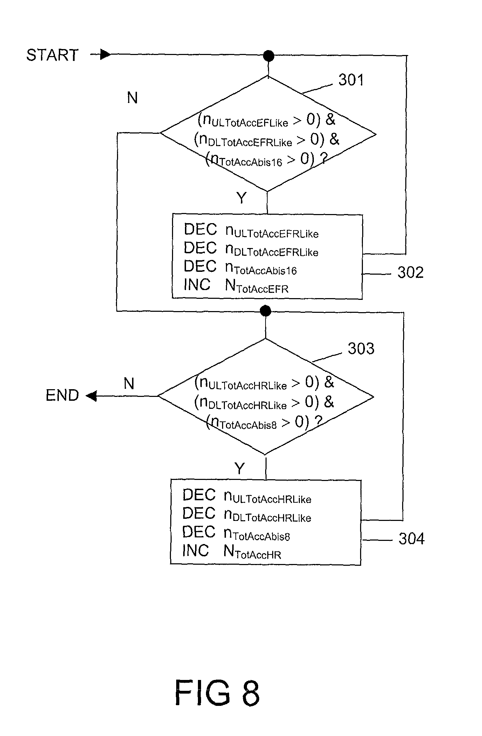

The matching step will be disclosed in greater detail with reference to Figs. 7A, 7B and 8.

Steps 104, 105 are repeated for all equipped carriers (steps 106, 107). When the counters of step 105 have been built for all carriers, the BCCH carrier is considered (step 108) to meet the constraint related to the O&M attribute BCCHIdleResThr. Counters $N_{AvEFR(B)}[b]$ (being B the logical identifier of the BCCH carrier), $N_{AvHR(B)}[b]$, $N_{TotAccEFR}$ and $N_{TotAccHR}$ shall be decreased by the number of units corresponding indicated by BCCHIdleResThr. As regards counters $N_{AvEFR(B)}[b]$ and $N_{AvHR(B)}[b]$, the subtraction shall start from the lowest priority band and go on for the other bands, in increasing order of priority. This is due to the fact that these resources would be actually assigned for last by the DCA algorithms. The priority dependence of such subtraction is the feature compelling to keep separate counts for the available resources on different carriers until the execution of that step.

Finally, at step 109, counters $N_{AvEFR}[b]$ and $N_{AvHR}[b]$ shall be retrieved as follows:

$$N_{AvEFR}[b] = \sum_{X=0}^{2} N_{AvEFR(X)}[b]$$

$$N_{AvHR}[b] = \sum_{X=0}^{2} N_{AvHR(X)}[b] \ .$$

The counts for the total accessible resources are already available after the scaling carried out in step 108.

Reference is now made to Figs. 7A and 7B. As far as the radio resources are concerned, the basic principle adopted is first to associate uplink and downlink resources belonging to the same priority band. When all possible associations of resources with the same priority have been built, the remaining resources are associated in such a way that first resources with the minimum priority difference (i. e. resources in adjacent bands) are chosen, and so on in order of increasing difference. Indeed, since the GSM implicitly assumes that the interference is the same for both directions of a communication, a radio channel obtained by associating uplink and downlink resources belonging to the same priority band (or to little different priority bands) represents the closest approximation of the GSM traffic channel.

When resources with different priorities are associated, the resulting channel is classified into a priority band having the mean value between the values of the priorities associated resources. In case of non-integer mean value, the channels are classified in part into the band with the immediately higher integer value and in part into the band with the immediately lower value, so as to obtain a substantial balance between the number of favoured and unfavoured channels.

That being stated, an index $\Delta$ cycling in the range 0...4 and representing such difference is considered, and for each value of A, the same range 0...4 shall be covered by index b. For each combination of indexes $\Delta$ and b, the following priority bands shall be coupled: first band (b) in uplink direction with band (b + $\Delta$) in downlink direction, as long as b + $\Delta \leq 4$, then band (b) in uplink direction with band (b - $\Delta$) in downlink direction, as long as b - $\Delta \geq 0$.

Taking this into account, the cycles starts with $\Delta$ and b = 0 (steps 201, 202), so that the check on whether b + $\Delta \leq 4$ at step 203 gives a positive result. The (E)FR-like resources are first considered. Step 204 is the check on whether uplink and downlink resources exist in band 0 and whether Abis resources exist. In the affirmative, at step 205, counters $n_{ULAvEFRLike}[b]$, $n_{DLAvEFRLike}[b + \Delta]$ and $n_{AvAbis16}$ are decreased by one unit and counter $N_{AvEFR(X)}[b + \Delta/2]$ (which stands for the partial contribute provided by the carrier X to $N_{AvEFR}[b + \Delta/2]$) is increased by one unit. The cycle continues as long as inequalities $n_{ULAvEFRLike}[b] > 0$, $n_{DLAvEFRLike}[b + \Delta] > 0$, $n_{AvAbis16} > 0$ hold.

When one of such inequalities no longer holds, the cycle for the half rate resources is started (steps 206, 207). These steps are identical to steps 204, 205, except that they concern counters $n_{ULAvHRLike}[b]$, $n_{DLAvHRLike}[b + \Delta]$ and $n_{AvAbis8}$, $N_{AvHR(X)}[b + \Delta/2]$.

When also check 206 gives a negative result, the check on whether b - $\Delta \geq 0$ is performed at step 208 and, if the check is positive, the association of resources in band (b) in uplink direction with resources in band (b - $\Delta$) in downlink direction is started. Steps 209 - 212 concerning this part of cycle is similar to steps 204 - 207, except that the counters concern priority band b-$\Delta$. In the present cycle, b = 0, $\Delta$ = 0, so that check 208 gives a positive result, but checks 209, 211 concern the same priority bands as checks 204, 206 and hence both of them give again a negative result. Consequently, the subsequent priority band is to be considered (step 213). The cycle of steps 203 to 212 is repeated for bands 1...4 and, of course, as long as $\Delta$ = 0, steps 209 to 212 have no effect.

When resources in the same priority bands have been so matched (output Y of decision step 214), $\Delta$ is incremented (step 215) and the cycle of steps 203 to 212 is repeated through all priority bands for $\Delta$ = 1...4. Now, priority band b-$\Delta$ is different by b+$\Delta$, so that checks 209 and 211 can each give a positive result even if checks 204 and 206 where negative. When checks 209 and 211 give a positive result counters $n_{YYAvEFRLike}[b]$, $n_{YYAvEFRLike}[b - \Delta]$ or $n_{YYAvHRLike}[b]$, $n_{YYAvHRLike}[b - \Delta]$ (where YY is UL or DL, respectively) and $n_{AvAbis16}$ or $n_{AvAbis8}$ are decreased by one unit and counters $N_{AvEFR(X)}[b - \Delta/2]$, $N_{AvHR(X)}[b - \Delta/2]$ (which stand for the partial contributes provided to $N_{AvEFR}[b - \Delta/2]$, $N_{AvHR}[b - \Delta/2]$ by carrier X) shall be increased by one unit.

The matching operations for the concerned carrier end when the check at step 216 reveals that $\Delta > 4$. The same operations are performed for all other carriers. The annexed Table I shows the result of the matching step for uplink and downlink resources on a carrier. The result applies to both the EFR and the HR resources, since the algorithm steps are the same. The balance mentioned above in the priority classification for matched resources with odd priority difference can be clearly seen.

Any uplink or downlink or Abis resource left spare for a carrier at the end of the complete cycle will remain unmatched, since of course EFR and HR resources cannot be matched and, as said, a channel must include resources belonging to the same carrier.

Referring now to Fig. 8, the matching of the total accessible resources is quite simpler, since priority is not to be considered.

The matching cycle of the accessible resources comprises four steps 301 - 304 similar to steps 204 to 207 of Fig. 7A.

At step 301, a check is made on whether uplink, downlink and Abis resources exist. In the affirmative, at step 302, counters $n_{ULTotAccEFRLike}$, $n_{DLTotAccEFRLike}$ and $n_{TotAccAbis16}$ are decreased by one unit and counter $N_{TotAccEFR}$ is increased by one unit. The cycle continues as long as the three the inequalities $n_{ULTotAccEFRLike} > 0$, $n_{DLTotAccEFRLike} > 0$, $n_{TotAccAbis16} > 0$ hold. When one of such inequalities no longer holds, the cycle for the half rate resources starts (steps 303, 304), counters $n_{ULTotAccHRLike}$, $n_{DLTotAccHRLike}$, $n_{TotAccAbis8}$ and $N_{TotAccHR}$ being now concerned.

Also in this case any resource left spare (i.e. unmatched) by the algorithm cannot of course be matched in any way.

It is evident that the above description has been given by way of non-limiting example and the variants and modifications are possible without departing from the scope of the invention, as defined in the appended claims.

Still with reference to the preferred application to the TD-SCDMA system, a different number of basic resources units in each time slot and of carriers in each cell can obviously be considered. Similarly, the skilled in the art will have no problem in adapting the uplink and downlink counters to the case of a "floating" switching point between the uplink and downlink time slots, as it can be suitable in systems in which the users have often to cope with the need of downloading e.g. huge files.

Moreover, even if the invention has been disclosed with reference to a combined TD-SCDMA - GSM system, the invention can be applied to cells of any other third generation system complying with the 3GPP specifications and having to send the resource indication to a GSM MSC. In such case the algorithm will be based on the same principles as that disclosed above for TD-SCDMA, taking of course into account the differences in the radio access technique. In particular, in the case of UMTS cells, where the uplink and downlink time slots belong to different carriers that are rigidly associated, the algorithm will be somewhat simplified in that a static association between uplink and downlink resources exist; only the possibility of different priorities in the two directions should be taken into account for the available resources. The skilled in the art has no difficulty in adapting relations 1 to 8 to a FDD system like UMTS in place of a TDD system.

In general, the invention can be applied to any other system in which cells with different radio access techniques have to send a resource indication to a circuit switching centre knowing only one of said techniques, during a handover managed by said switching centre.

TABLE I

| MATCHING OF UPLINK AND DOWNLINK RESOURCES AND ASSIGNMENT TO THE PRIORITY BANDS | | |
|---|---|---|
| UL Band: 0 | DL Band: 0 | ---> Band 0 |
| UL Band: 1 | DL Band: 1 | ---> Band 1 |
| UL Band: 2 | DL Band: 2 | ---> Band 2 |
| UL Band: 3 | DL Band: 3 | ---> Band 3 |
| UL Band: 4 | DL Band: 4 | ---> Band 4 |
| UL Band: 0 | DL Band: 1 | ---> Band 1 |
| UL Band: 1 | DL Band: 2 | ---> Band 2 |
| UL Band: 1 | DL Band: 0 | ---> Band 0 |
| UL Band: 2 | DL Band: 3 | ---> Band 3 |
| UL Band: 2 | DL Band: 1 | ---> Band 1 |
| UL Band: 3 | DL Band: 4 | ---> Band 4 |
| UL Band: 3 | DL Band: 2 | ---> Band 2 |
| UL Band: 4 | DL Band: 3 | ---> Band 3 |
| UL Band: 0 | DL Band: 2 | ---> Band 1 |
| UL Band: 1 | DL Band: 3 | ---> Band 2 |
| UL Band: 2 | DL Band: 4 | ---> Band 3 |
| UL Band: 2 | DL Band: 0 | ---> Band 1 |
| UL Band: 3 | DL Band: 1 | ---> Band 2 |
| UL Band: 4 | DL Band: 2 | ---> Band 3 |
| UL Band: 0 | DL Band: 3 | ---> Band 2 |
| UL Band: 1 | DL Band: 4 | ---> Band 3 |
| UL Band: 3 | DL Band: 0 | ---> Band 1 |
| UL Band: 4 | DL Band: 1 | ---> Band 2 |
| UL Band: 0 | DL Band: 4 | ---> Band 2 |
| UL Band: 4 | DL Band: 0 | ---> Band 2 |

**Claims**

1. A method of performing a resource indication procedure in a mobile communications system including cells operating according to a first radio access technology and other cells operating according to a second radio access technology, for providing a circuit switching centre (7) knowing only the first radio access technique with information about the resources in one of said other cells, the method comprising a remapping of communication resources of said one cell into equivalents of resources that can be recognised by said circuit switching centre (7), said remapping comprising:

- grouping available resources and, if requested, accessible resources, enabled to carrying traffic, for each section of a bi-directional communication path between a user terminal (6, 6a...6n) served by said cell (C1, C2) and a station controller (3, 4, 5, CN1, CN2) on which resources can be allocated independently of resource allocation on other sections of said path, and for each direction of any such section providing for independent resource allocation in both directions;
- associating resources on the different sections and on the different directions on a section, so as to form said equivalent resources, and counting the resources resulting from the association; and
- sending a message including counts of the associated resources to said circuit switching centre (7),

said grouping step being performed separately for resources configured to convey communications with a different specific characteristic and said associating step being performed by selecting the resources in homologous groups obtained by said grouping step on each said path section and path section direction.

2. A method as claimed in claim 1, wherein, for the available resources, said grouping step includes sorting the resources on radio sections of said path according to the value of an interference-related parameter and assigning the resources to one of a number of bands of values of said parameter, and said associating step includes assigning each matched resource to one of said bands, depending on the bands the radio resources being associated belong.

3. A method as claimed in claim 1 or 2, wherein:

- said first radio access technique is the radio access technique defined by the GSM/DCS standards, and said second radio access technique is one of the radio access techniques defined by the 3rd Generation Partnership Project standards; and
- said grouping and matching steps build associated resources equivalent to GSM traffic channels suitable for conveying full rate speech communications and half rate speech communications, respectively.

4. A method as claimed in claim 3, wherein:

- said second radio access technique is a time division, synchronous code division multiple access technique, whereby each cell operating according to said second technique has available a plurality of carriers, a plurality of time slots for each carrier, respective pluralities of spreading codes and training sequence codes for each time slot for both an uplink and a downlink direction of communication on a radio interface (Uu), and a plurality of time intervals on an interface (AbisM) between a transceiving station (2a, 2b...2y, B1, B2) and said station controller (3, 4, 5, CN1, CN2), said spreading codes and said time intervals comprising spreading codes and time intervals suitable for carrying full rate or half rate speech communications,
- the resources on each direction of said radio interface (Uu) and on said interface (AbisM) between a transceiving station (2a, 2b...2y, B1, B2) and said station controller (3, 4, 5, CN1, CN2) are independently allocated with a dynamic channel allocation; and
- said grouping and associating steps assign the available resources to priority bands, that is bands of values of a probability that the interference generated by other cells or frequencies on the resource is below a given threshold, said band being determined based on the priority values allotted to each time slot.

5. A method as claimed in claim 4, wherein said grouping and associating steps build associated resources comprising each a spreading code and a training sequence code for both the uplink and the downlink direction on a same carrier and a time interval in a frame on the interface between said transceiving station (2a, 2b...2y, B1, B2) and said station controller (3, 4, 5, CN1, CN2), for full rate and half rate communications

6. A method as claimed in claim 5, wherein said grouping step comprises:

- counting the numbers of available time intervals and, if requested, the total numbers of accessible time intervals suitable for conveying full rate and half rate communications, respectively;
- counting the number of available radio resources for each carrier, separately for resources suitable for full-rate and half-rate communications on both the uplink and downlink time slots and, for each direction, separately for the different priority bands, the available resources in a time slot being the minimum between the number of the available training sequence codes and the number of available pairs of basic resource units in case of full-rate resources, and the minimum between the number of the available training sequence codes and the number of available basic resource units in case of half-rate resources;
- counting, if requested, the total number of accessible radio resources in all carriers, separately for resources suitable for full-rate and half-rate communications on both the uplink and downlink time slots, the total accessible resources in a time slot being the minimum between the number of training sequence codes of that time slot and the number of pairs of basic resource units not reserved to signalling in case of full rate resources, and the minimum between the number of training sequence codes and the number of basic resource units not reserved to signalling in case of half rate-like resources.

**7.** A method as claimed in claim 6, wherein said associating step includes, for both the full rate and half rate available resources in a carrier, the steps of:

> a) checking whether radio resources belonging to a same priority band are available in both the uplink and the downlink direction and whether time intervals are available on said interface (AbisM) between said transceiving station (2a, 2b...2y, B1, B2) and said station controller (3, 4, 5, CN1, CN2);
> b) as long as the check of step a) gives a positive outcome:

>> b1) decreasing by one unit the counts of the respective resources obtaining by said counting steps; and
>> b2) increasing of one unit a count of the available resources for that carrier and that priority band;

> c) when resources belonging to the same priority band are no longer available in the uplink and downlink directions, checking for the availability of uplink and downlink resources in respective different priority bands and for the simultaneous availability of resources on said interface (AbisM) between said transceiving station (2a, 2b...2y, B1, B2) and said station controller (3, 4, 5, CN1, CN2);
> d) as long as the check of step c) gives a positive outcome:

>> d1) decreasing by one unit the counts of the respective resources obtained in said counting steps; and
>> d2) increasing of one unit a count of the available resources for that carrier and for a priority band whose value is the average between the priority values of the uplink and downlink resources that have been associated.

**8.** A method as claimed in claim 7, wherein said check on the availability of uplink and downlink radio resources in different priority bands is performed in order of progressively increasing difference in the priorities.

**9.** A method as claimed in claim 7 or 8, wherein said associating step includes assigning associated resources obtained from association of uplink and downlink radio resources in different priority bands, to a priority band that has a value intermediate between the values of the priority bands the resources having been associated belong to, said intermediate value being the arithmetic mean of said values if said mean is an integer, or being the immediately lower or upper integer if said mean is not an integer.

**10.** A method as claimed in claim 9, wherein assignment to a band with the lower or the upper integer value of the priority band is carried out so as to obtain a substantial balance between the number of resources assigned to either value.

**11.** A method as claimed in claim 5, wherein said associating step includes, for both the full rate and half rate accessible resources in a carrier, the steps of:

> a) checking whether radio resources are available in the uplink and downlink directions and time intervals are available on said interface (AbisM) between said transceiving station (2a, 2b...2y, B1, B2) and said station controller (3, 4, 5, CN1, CN2);
> b) as long as the check of step a) gives a positive outcome:

>> b1) decreasing by one unit the counts of the respective resources obtaining by said counting steps; and
>> b2) increasing by one unit a count of the accessible resources, the count for each carrier being accumulated with the count for any preceding carrier.

**12.** A method as claimed in any of claims 5 to 11, further comprising the step of decreasing the counts of the accessible resources and of the available resources relevant to a carrier including time slots and codes reserved to signalling, by an amount corresponding to a predetermined number of resources that are to be left idle on that carrier.

**13.** A method as claimed in claim 12, wherein said decreasing step for the available resources is performed starting from resources belonging to the lowermost priority band and going on in order of increasing priority.

14. A method of handover including a resource indication procedure in a mobile communications system including cells (C1, C2) operating according to a first radio access technology and other cells operating according to at least a second radio access technology, and also including a circuit switching centre (7) knowing only said first radio access technique, wherein said resource indication procedure performed by the method according to any preceding claim.

15. A mobile communications system including cells (C1, C2) operating according to a first radio access technology and other cells operating according to at least a second radio access technology, wherein a handover controlled by a circuit switching centre (7) and including a resource indication procedure is performed by a method according to claim 14.

FIG 1

FIG 2

FIG 3

EP 1 424 864 A1

FIG 4 (GSM)

FIG 5 (TD-SCDMA)

START

grouping Abis resources into the counters
$n_{AvAbis16}$, $n_{AvAbis8}$, $n_{TotAccAbis16}$ and $n_{TotAccAbis8}$ —— 101

$X = 0$ —— 102

N    is carrier X equipped? —— 103

Y

grouping radio resources of carrier X into counters $n_{ULAvEFRLike}[b]$, $n_{DLAvEFRLike}[b]$, $n_{ULAvHRLike}[b]$, $n_{DLAvHRLike}[b]$, $n_{ULTotAccEFRLike}$, $n_{DLTotAccEFRLike}$, $n_{ULTotAccHRLike}$ and $n_{DLTotAccHRLike}$ —— 104

matching radio and Abis resources in order to retrieve counters $N_{AvEFR(X)}[b]$, $N_{AvHR(X)}[b]$, $N_{TotAccEFR}$ and $N_{TotAccHR}$ —— 105

INC X —— 106

107    X > 2 ?    N

Y

scaling counters $N_{AvEFR(B)}[b]$, $N_{AvHR(B)}[b]$, $N_{TotAccEFR}$ and $N_{TotAccHR}$ according to O&M attribute BCCHIdleResThr —— 108

retrieving counters $N_{AvEFR}[b]$ and $N_{AvHR}[b]$ —— 109

END

# FIG 6

FIG 7A

TO 213,
FIG. 7A

FROM
203,
206

(B)

(A)

208

N ─── $(b - \Delta) \geq 0$ ?

Y

209

N ─── $(n_{ULAvEFRLike}[b] > 0)$ &
$(n_{DLAvEFRLike}[b - \Delta] > 0)$ &
$(n_{AvAbis16} > 0)$ ?

Y

DEC   $n_{ULAvEFRLike}[b]$
DEC   $n_{DLAvEFRLike}[b - \Delta]$
DEC   $n_{AvAbis16}$
INC   $N_{AvEFR(x)}[b - \Delta/2]$

210

211

N ─── $(n_{ULAvHRLike}[b] > 0)$ &
$(n_{DLAvHRLike}[b - \Delta] > 0)$ &
$(n_{AvAbis8} > 0)$ ?

Y

DEC   $n_{ULAvHRLike}[b]$
DEC   $n_{DLAvHRLike}[b - \Delta]$
DEC   $n_{AvAbis8}$
INC   $N_{AvHR(x)}[b - \Delta/2]$

212

# FIG 7B

START →

301

N

$(n_{ULTotAccEFLike} > 0)$ &
$(n_{DLTotAccEFRLike} > 0)$ &
$(n_{TotAccAbis16} > 0)$ ?

Y

DEC $n_{ULTotAccEFRLike}$
DEC $n_{DLTotAccEFRLike}$
DEC $n_{TotAccAbis16}$
INC $N_{TotAccEFR}$

302

303

END ← N

$(n_{ULTotAccHRLike} > 0)$ &
$(n_{DLTotAccHRLike} > 0)$ &
$(n_{TotAccAbis8} > 0)$ ?

Y

DEC $n_{ULTotAccHRLike}$
DEC $n_{DLTotAccHRLike}$
DEC $n_{TotAccAbis8}$
INC $N_{TotAccHR}$

304

# FIG 8

**European Patent Office**

## EUROPEAN SEARCH REPORT

Application Number

EP 02 42 5738

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 01 63952 A (ERICSSON TELEFON AB L M) 30 August 2001 (2001-08-30) * the whole document * --- | 1-15 | H04Q7/38 |
| A | 3GPP: "3GPP TS Group GSM EDGE Radio Access Network" 3G TS 48.008 V4.0.0, August 2000 (2000-08), pages 20-33, XP002235122 * page 20, line 12 - page 21, line 25 * ----- | 1-15 | |

TECHNICAL FIELDS SEARCHED (Int.Cl.7)

H04Q

The present search report has been drawn up for all claims

| Place of search | Date of completion of the search | Examiner |
|---|---|---|
| MUNICH | 6 May 2003 | Harrysson, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                    EP 02 42 5738

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2003

| Patent document cited in search report | | Publication date | Patent family member(s) | | Publication date |
|---|---|---|---|---|---|
| WO 0163952 | A | 30-08-2001 | AU | 3431701 A | 03-09-2001 |
| | | | EP | 1260110 A1 | 27-11-2002 |
| | | | WO | 0163952 A1 | 30-08-2001 |

EPO FORM P0459

For more details about this annex : see Official Journal of the European Patent Office, No. 12/82